# EUROPEAN PATENT SPECIFICATION

(11) **EP 3 235 465 B1**
(45) Date of publication and mention of the grant of the patent: **30.10.2019**
(21) Application number: 15868742.6
(22) Date of filing: 10.12.2015
(51) Int. Cl.: A61C 8/00

(54) **IMPLANT**
IMPLANTAT
IMPLANT

(30) Priority: 15.12.2014 BR 102014031426; 02.10.2015 US 201514874145
(43) Date of publication of application: 25.10.2017
(73) Proprietor: JJGC Indústria e Comércio de Materiais Dentários S.A., 81270-200 Curitiba - PR (BR)
(72) Inventor: THOMÉ, Geninho, 80420-170 Curitiba - PR (BR); ANDREAS MERTIN, Felix, 81830-285 Curitiba - PR (BR); GOLIN, Alexsander Luiz, 81570-001 Curitiba - PR (BR); LUCCA, Ilderaldo Jose, 82020-000 Curitiba - PR (BR)
(74) Representative: Elzaburu S.L.P.
(86) International application number: PCT/BR2015/050240
(87) International publication number: WO 2016/094997

(56) References cited:
- WO-A1-2013/157756
- BR-A2- PI0 902 500
- BR-U2- MU8 801 468
- US-A- 5 816 812
- US-A1- 2012 077 151
- US-A1- 2013 273 500
- US-B2- 7 198 488
- US-B2- 8 277 218

## Description

### Technical field

The invention refers to an advantageous constructive layout for bone-integrable dental and orthopedic implants.

Bone-integrable Implants are known in the technique as having the function of anchoring prosthetic structures, bone substitutes or corrective elements at the human skeleton. In particular interest for this invention are the bone-integrable dental and orthopedic implants in the form in threads, respectively of the type that installed in the mouth for support of prosthetic substitutes for one or more lost teeth and of the kind that it is installed in the column for fixation in bars for support and spacing in vertebrae.

### Previous technique

Bones in general consist of a rigid external layer and a vascularized spongy interior. The thickness of each one of these rigid and spongy regions is specific to the biology of each one, but during the installation, invariably part of the implant will remain in the rigid region and part in the spongy region. Critical for the stability of the implant soon after the installation and the time of subsequent healing is that in the process of insertion of implant, both the amount of removed bone and blood vessels in the vicinity of the implant should be minimized.

The majority of implants available at the marketplace consists of one cylindrical body, generally in the form of a thread, adapted for insertion in the bone. The cylinder is usually made in one biocompatible metal such as, for example, titanium and its alloys, being able to be coated with other types of biocompatible materials such as, for example, hydroxyapatite, and/or still receiving a surface treatment to improve the quality in bony integration of the surface.

The many different implants diverge in the characteristics and geometry of their threads, always seeking to perfect the coupling quality with the bone structure.

US 8,029,285, illustrates a representative implant of the current technique in the general form of a threaded cylinder that has a prosthetic interface in its upper end. At the bottom end of the implant, also known as apical end, a cut is provisioned covering multiple threads, forming the self-cutting structure. In the insertion of implants with this type of structure, the lower part tends to accumulate bone material, which hinders the outflow of the cut material to the point of loss of self-cutting effect. The same implant also provides a light increase of the cylindrical body diameter in its upper part, also known as cervical end. This increase is aimed at compressing the rigid region of the bone at the final moment of implant installation, thereby increasing stability soon after installation.

The problem of this type of implant was already known, for example, EP 0 895 757 mentions the accumulation of material and fluids in the bone cavity during implant installation, which can lead to aseptic necrosis due to compression, and subsequently to increased healing time. This document provides channels of outflow and a body whose core has a tapered section and a cylindrical section for the gradual compression of the bone without fluid retention.

US 8,714,977 illustrates the technique state to the present invention. The document defines an implant whose core has tapered profile, and the cylindrical profile threads whose effect is the increase of the thread width in the apical direction of the implant. It also defines the taper of the thread profile, which starts wide and low near the cervical end of the implant and becomes tall and thin near the apical end, constantly growing along the path. It also defines a self-cutting structure analogous to that of US 8,029,285, near the apical end of the implant.

US2013/0273500 and WO2013/157756 disclose threaded implants.

The use of the tapered core allows insertion of the implant into a smaller diameter bore, which will be removed during installation by the action of the implant, preserving a greater amount of bone around the implant. The tapered core also has the advantage of compressing the bone during installation, increasing stability after insertion. However, the use of wide threads makes it difficult to align the implant in the bore at the initial moment of the installation, which can lead to the need for adjustment during the course, increasing the bone loss that was to be avoided. The thread width may also pose a problem when the area for insertion of the implant is limited by the roots of adjacent teeth, especially in the molar region where the roots protrude sideways, since the cut of the root by the thread would damage and even disable the healthy tooth. In addition, the large thread trims a larger amount of vascularization around the implant region, which delays healing. In turn, the self-cutting structure concentrated on the apical portion of the implant presents the problems of material accumulation and its known consequences in the technique.

### Summary

The present invention solves the problem of insertion with minimal bone removal, ease of orientation during the installation and minimal damage to the circulatory vessels in the implant region, while improving the stability of the implant soon after installation in relation to the technique state. This objective is achieved by means of a thread geometry, which distributes the self-cutting function along its length with cut-off hemispherical cavities and a diameter profile configuration, whose height provides in its central region the largest thread width, as will be shown in detail below.

The invention is defined in the appending claims.

According to a further aspect of the invention, an implant for bone anchoring (e.g., maxilla or jaw) is provided. The implant includes a cervical region having a cervical end and an apical region having an apical end, with the apical end disposed at the opposite end of the cervical end. The implant has one core, one prosthetic interface and at least one thread. The nucleus may extend from the cervical region to the apical region. The prosthetic interface is in the cervical region (e.g. partially or completely).

At least one thread may extend around the core in a plurality of turns from the cervical region to the apical region and at least to one thread that may contain a plurality of curved cavities, and each one may define a cutting edge. A first curved cavity in a first turn does not necessarily need to overlap a second curved cavity in a second turn, with the second turn being adjacent to the first turn in a cervical direction. The first curved cavity does not necessarily need to overlap a third curved cavity on a third turn, with the third turn being adjacent to the first turn in an apical direction. The overlapping, if any, of the second and third curved cavities with the first curved cavity preferably occurs on opposite sides of the first curved cavity.

The plurality of curved cavities are, each one of them, cut in a shape corresponding to a semi-spherical surface. The plurality of curved cavities may be, each one of them, partially cut in a shape corresponding to a semi-cylindrical surface. The semi-spherical cavity may intersect with the semi-cylindrical cavity in each of the curved cavities.

The second turn may be immediately adjacent to the first turn in a cervical direction, and the third turn may be immediately adjacent to the first turn in an apical direction. In some embodiments, the first curved cavity in the first turn does not overlap the second cavity curve in the second turn by more than 20% of the width of the first curved cavity (e.g., on one side of the first curved cavity), and the first curved cavity in the first turn does not overlap with the third curved cavity in the third turn by more than 20% of the width of the first curved cavity (e.g., on an opposite side of the first curved cavity). The first curved cavity is not required to overlap with the second curved cavity nor overlap with the third curved cavity.

According to a further aspect of the invention, an implant for bone anchoring (e.g., maxilla or jaw) is provided. The implant includes a cervical region having a cervical end and an apical region having an apical end, with the apical end disposed at the opposite end of the cervical end. The implant also has one core, one prosthetic interface and at least one thread. The core may extend from the cervical region to the apical region. The prosthetic interface is in the cervical region (e.g. partially or completely). At least one thread extends around the core in a plurality of turns from the cervical region to the apical region. At least one thread includes a plurality of curved cavities, each of which defines a cutting edge. The curved cavities are cut in a shape corresponding to a hemispherical surface part and partially cut in shape corresponding to a portion of semi-cylindrical surface. The semi-spherical cavity may intersect with the semi-cylindrical cavity.

A method may include positioning an apical end of the implant into a desired location of the bone (e.g., in a prepared bore in the mandibular bone, where a prosthesis will be placed to replace one or more teeth). The implant may have at least one thread extending around the implant core in a plurality of turns. At least one thread may be provided with a plurality of curved cavities, with each one defining a cutting edge where a partially semi-spherical curved portion of the cavity encounters the outer surface of at least one thread. The said cutting edge is also known as sharp edge. The method may further include rotating the implant (e.g. clockwise) so that at least one thread cuts the bone with which it is in contact to extend the opening in the bone as the implant is screwed into the bone. At least one thread may have a self-sharpening configuration (e.g. at least where the thread(s) begin, at or adjacent to the apical end of the implant) to compress the bone as the implant is installed. During the installation, the method may include applying a counter-torque by rotating the implant in the opposite direction (e.g., counterclockwise) to cut the bone with at least one cutting edge. Such counter-torque rotation may be especially advantageous to remove dense/hard bone tissue found during installation. For example, the dentist or surgeon can apply the counter-torque to cut and remove hard/dense bone material in a partial position of the installation before reaching the desired full depth of installation in the bone because, for example, the implant has been hampered during installation. After the counter-torque rotation, the method can include rotating the implant in the installation direction (e.g., clockwise) to complete the installation. The method may further include repeating one or more times the counter-torque rotation during installation at the same depth or at different depths of the first counter-torque rotation. After installation, a prosthesis (e.g., crown, abutment, or bridge) may be attached to the implant directly or by means of an intermediate member such as an abutment (also known as post).

The method may include positioning an apical end of the implant at a desired location of the bone (e.g., into a bore prepared in the mandibular bone, where a prosthesis will be placed to replace one tooth or more teeth). The implant may have at least one thread extending around the implant core in a plurality of turns. At least one thread may have an outer diameter of the thread configured to define a cylindrical portion and a tapered portion formed closer to the apical end than the cylindrical portion along the length of the implant. The method may further include rotating the implant in such a way that the tapered portion of at least one thread increases an opening diameter in the bone as the tapered portion penetrates the bone until the tapered portion is fully screwed into the bone. The method may further comprise continuing to rotate the implant so that the cylindrical portion of at least one thread enters the bone without increasing the opening diameter of the bore. The outer diameter of the cylindrical portion is equal to the maximum outer diameter of the tapered portion.

Additionally, the cylindrical portion may be formed along at least 25% of the thread engagement.

### Brief description of the drawings

Figure 1 shows a cross-sectional view of a first embodiment of the implant that is the subject-matter of the present invention.
Figure 2 shows a detail of the thread of the implant of Figure 1
Figure 3 shows in details the implant sections of Figure 1.
Figure 4 shows a side view of the implant of Figure 1
Figure 5A shows a cross-sectional view along line AA of Figure 4, including detail of the self-cutting cavity.
Figure 5B shows a detailed perspective view of the self-cutting cavity of the Implant of Figure 1.
Figures 6, 7 and 8 show right upper, isometric and lateral views, all respectively of the implant of Figure 1.
Figures 9, 10 and 11 show right upper, isometric and lateral views, all respectively of a second embodiment of the implant that is the subject-matter of the present invention.
Figures 12, 13 and 14 show right upper, isometric and lateral views, all respectively of a third embodiment of the implant that is the subject-matter of the present invention, including a prosthetic interface in the form of an external hexagon.
Figures 15 and 16 show right top and side views, all respectively of a fourth embodiment of the implant that is the subject-matter of the present invention, including part of the prosthetic geometry in the implant itself, known as a single body, still provided with concave rings in its portion cervical.
Figure 17 shows the right side view of a fifth embodiment of the implant, analogous to the fourth embodiment, but without concave rings in its cervical portion.

### Description

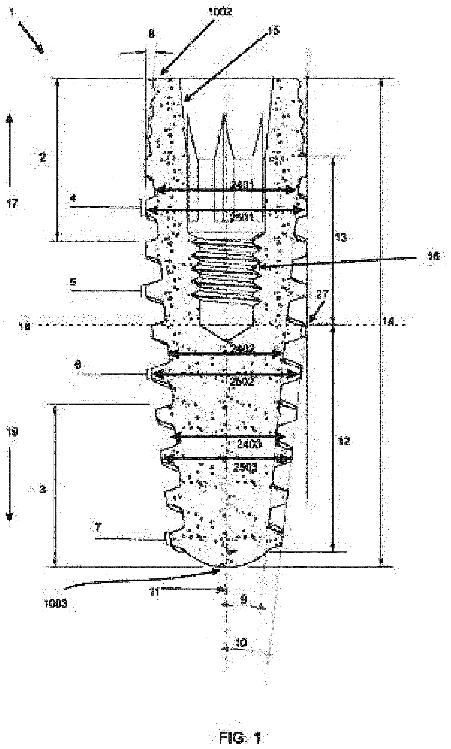

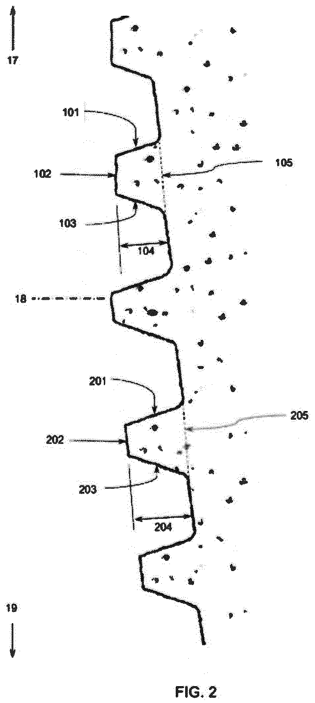

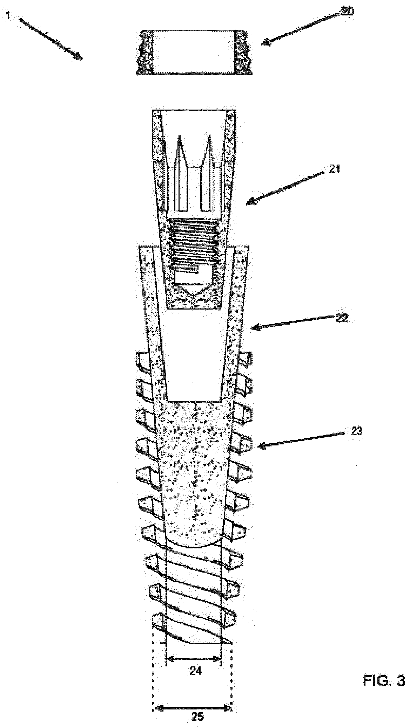

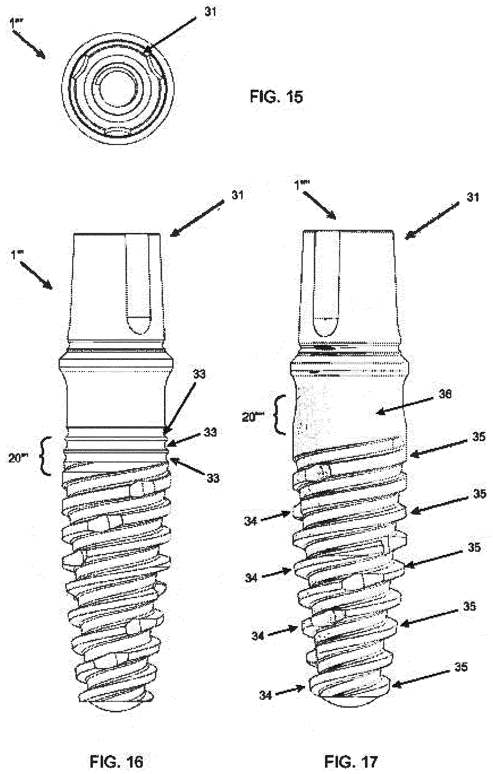

Figures 1-8 illustrate a first embodiment (1) of the implant that is the subject-matter of the present invention in several views and cuts. The Implant (1) generally consists of a core (22) around which at least one thread (23) extends. It may additionally include a prosthetic interface (21) or a prosthetic body (31) (shown in the embodiment of the Figures 15-17), and a special cervical geometry at the upper end (20). The implant (1"') including the prosthetic body (31) is known as a single body implant.

The upper portion of the implant is called cervical region (2), and the lower, apical region (3). The length of the implant (14) is chosen according to the biological space available for insertion. Upon installation, the apical end (1003) of the apical region (3) of the implant (1) is inserted into the bone, and the implant is screwed to the proper depth. The cervical end (1002) of the cervical region (2) is exposed to subsequent installation of the components to be anchored in the implant (1).

The thread (23) extends from the cervical region (2) to the apical region (3), and may include one or more opposed propellers (34, 35), where the number of propellers is chosen according to the desired number of turns for implant installation. The thread is divided into two parts, the first cylindrical portion (13) characterized by the fact that the outer diameter (25) of the thread is constant in this portion, and the second tapered portion (12) characterized by the fact that the outer diameter of the thread (25) is decreasing in this portion as the thread advances in the apical direction (19). The cylindrical (13) and tapered (12) portions of the thread are in a midline (18), which establishes an inflection point (27) from which the external diameter (25) of the thread passes from constant to decreasing. In the implant, the ratio of the length of the taper portion of the thread (12) with the length of the implant (14) ranges from 1:3 to 2:3, and is preferably 1:2.

The outer diameter (24) of the core (22) is also decreasing from the cervical region (2) to the apical region (3). However, the decay ratio of the external diameter of the thread (25) in its tapered portion (12) is greater than the decay ratio of the outer diameter of the core (24), which can be seen in Figure 1, considering the central axis (11) of the implant (1) and the lines that mark the decay rate (10) of the outer diameter of the thread (23) and the decay rate (9) of the outer diameter of the core (22). These lines intersect when projected in the apical direction (19). The obtained result is that the outer diameter (24) of the core (22) decreases in the apical direction (19) and the outer diameter (25) of the thread is constant in a first cylindrical portion (13) and decreasing in a second tapered portion (12) also in the apical direction (19), where the decreasing rate (10) of the outer diameter of the thread (23) in its tapered portion (12) is greater than the decreasing rate (9) of the core diameter (24).

The difference between the diameters of the core (24) and of the thread (25) is therefore greater near the inflection point (27), where the diameters of the core (2402) and of the thread (2502) have more distinct values. This difference between the diameters decreases both in the cervical direction (17) and in the apical direction, (19) where the core diameters (2401, 2403) close to the cervical (1002) and apical (1003) ends, are proportionally closer to the values of the screw diameters (2501, 2503) close to these very ends.

Each straight section of the thread has a cervical face (101, 201), a top (102, 202), an apical face (103, 203) and a base (105, 205), the height (104, 204) of the thread (23) in a given thread section, with the distance between the base (105, 205) and the top (102, 202) in that section, and the width of the thread in the section is the distance between the cervical face (101, 201) and the apex face (103, 203) measured at the top (102, 202) of the respective section.

In the proposed implant, both the height and width of the implant are variable. The greater height (104, 204) of the thread (23) occurs at the transition point (27) between the cylindrical portion (13) and the tapered portion (12) of the thread, and the width of the thread (4, 5, 6, 7) is greater in the threads (4, 7) close to the cervical (1002) and apical (1003) ends, and shorter in the threads (5, 6) close to the point of transition (27) between the cylindrical portion (13) and the tapered portion (12) of the thread (23).

The implant thread (23) also includes semi-spherical surface cutting edges (40) spaced apart along their entire length arranged to provide the self-etching effect during implant installation. Such edges present in the thread fillet consist of one, two or more rounded faces. The preferred configuration is the two-face edge, where at least one face has at least 5% of the normal axis of its surface pointing towards the opposite direction of the installation (direction of insertion of the screw), and these normal axes are usually found near the edge of the curved face with the lateral face of the thread, where a deviation of up to 15° in any direction is considered to be aligned. The curved face has the slope (42) in relation to the tangent of the curvature of the side face of the thread at the point where the curved face starts, and the inclination value (42) may vary from 75° to 105°. Preferably, the central axis of at least one face has an inclination in relation to the longitudinal axis of the implant (11) to follow the inclination of the thread, whose level may vary from 65° to 115°. The side face has an angle substantially parallel to the tangent of the curvature on the side face of the thread at the point where the first face starts (41). The edge (40) will preferably occur over the thread, with the first edge (40) being considered closest to the apical end (1003) of the implant, where at this very apical distance other edges may occur from 60° to 180° of the first one, and the longitudinal axis of the implant (11) may be used as a reference to the measurement of the angle. The next edge in the cervical direction preferably occurs in the thread that is adjacent to the anterior one in the cervical (17) direction of the implant, and there may be an angle between the previous edge and the next edge using the longitudinal axis (11) of the implant as a reference, but in this preferred embodiment, this angle is 45° in the direction opposite to the implant installation.

The apical end (1003) of the implant (1) may be flat, but it preferably has essentially rounded shape to prevent damage to the sinus membrane in case of excessive advance during installation. In order to avoid damage, the apical end (1003) extends in the apical direction (19) between 0.1 and 0.7 mm ahead of the beginning of the threads (23), preferably between 0.25 and 0.5 mm.

The circular surface of the special cervical geometry at the upper end (20) of the cervical region (2) of the implant (1) may contain one or more channels in the form of concave rings (33) with the proportion between the ratio and the depth of concavity of about 4:1. In its preferred configuration, the special cervical geometry (20) has frustotapered shape (8) convergent in the cervical direction (17). The same special geometry may also be in the form of a parallel cylinder (36), whose outer diameter is equal to the maximum outer diameter of the implant.

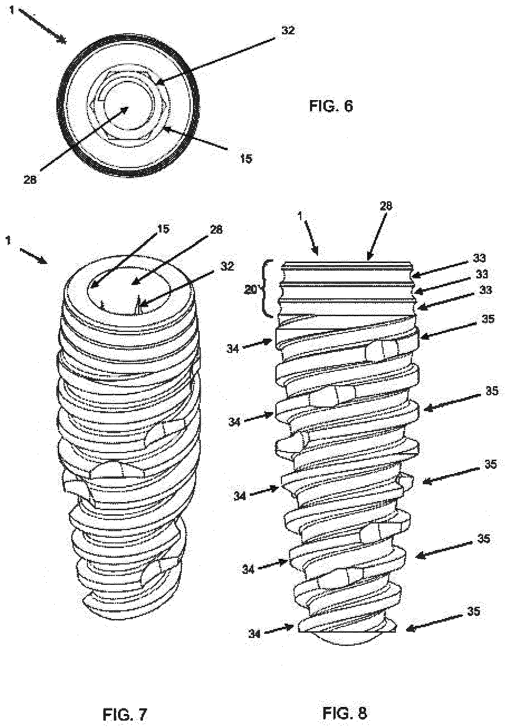

In the cervical portion of the implant is provided the prosthetic interface, whose function is both to connect the implant to the prosthesis to be installed and to prevent relative movement (rotation, in particular) between both parts. The prosthetic interface (21) of the implant (1) may be of different types known in the technique, such as, for example, tapered, hexagonal, and octagonal, among others, used together or alone. For example, alternative prosthetic interface modes (28, 29, 30, 31) are illustrated in Figures 6 to 17.

Figures 6, 7 and 8 show a morse taper (15) associated with an inner hexagon (32) to form the prosthetic interface (28).

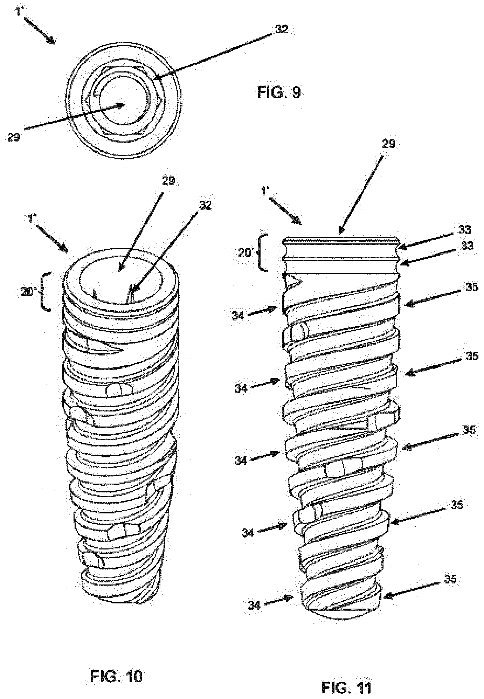

In turn, Figures 9, 10 and 11 show a second embodiment (1') of the implant that is the subject-matter of the present variant invention of prosthetic interface (29), which also has internal hexagon (32) and morse taper (15). This embodiment (1') is analogous to the prior embodiment (1) of the invention, but its cervical geometry at the upper end (20') has only two channels in the form of concave rings (33).

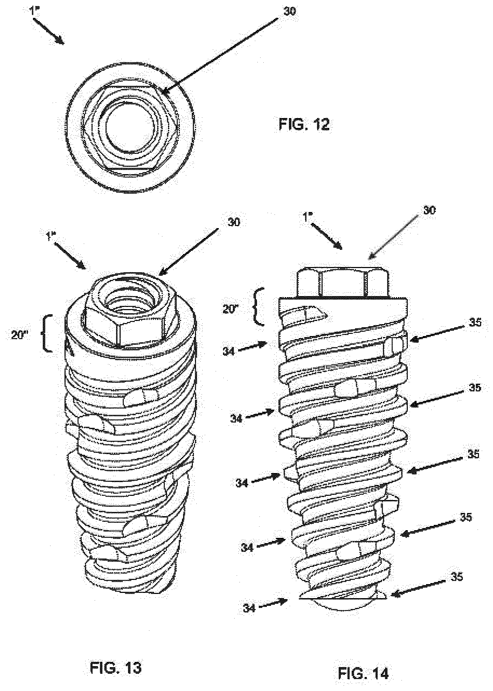

Figures 12, 13 and 14 show a third embodiment of the implant (1") of the invention, analogous to the first embodiment (1) of the invention, but provided with an interface variant using external hexagon (30). Common to all of these prosthetic interfaces (21, 28, 29, 30) is the arrangement of internal threads (16) for securing the prosthetic screw, which will secure the intermediate element known as connection, responsible for connecting the implant to the prosthetic crown or bridge, which aesthetically replace one or more missing dental elements. In this embodiment (1") of the invention, the upper end of the cervical portion (20") of the implant lacks concave rings (33).

Figures 15 and 16 show the fourth embodiment of the implant (1") that is the subject-matter of the present invention, analogous to the first embodiment (1) of the invention, however where a prosthetic interface of the single body type (31) is provided, adapted to directly receive the prosthetic crown or bridge, dispensing the intermediate member and thus avoiding a coupling between two pieces in the sub gingival region. In this fourth embodiment (1"') of the invention, the upper end of the cervical portion of the implant (20") provides three channels in the form of concave rings (33).

Figure 17 shows a fifth embodiment (1"'), similar to the fourth embodiment (1"'), but it has no concave rings at the upper end (20"") of its cervical portion. In this fourth embodiment (1"') the cervical portion is in the form of a parallel cylinder (36).

A further aspect of the present invention relates to alternative configurations for the upper end of the cervical portion (20). In this aspect, the ratio of the radius and the depth of concavity defining the geometry of the one or more channels in the form of concave rings (33) may alternatively be of 2:1, 3:1, 5:1 or 6:1, in addition to the above-mentioned 4:1. The angle of the frustotapered portion (8) may be between: 1° and 60°; 1° and 45°; 1° and 30°; 5° and 30°; or, 5° and 20°. The frustotapered portion (8) may begin where the threads end and continue in the cervical direction (17). Alternatively, the cervical region (20", 20"") does not need to include a frustotapered portion, and the implant threads may terminate at the cervical end (20") or there may be a portion of the cervical region (20"") which extends with a constant diameter or shape other than frustotapered.

A further second aspect of the invention relates to the angles of decrease of the core (9) and of the thread (23) in its tapered portion(12). These angles are preferably acute, being between: 1° and 60°; 1° and 45°; 1° and 30°; 5° and 30°; 5° and 20°; 1° and 20°; 1° and 15°; or equal to 15°. Still, even if contained within the same range of values, the angles are not necessarily equal to each other.

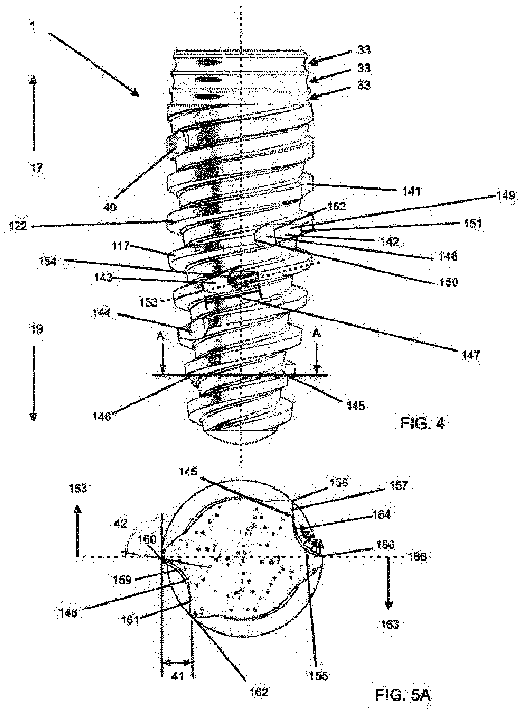

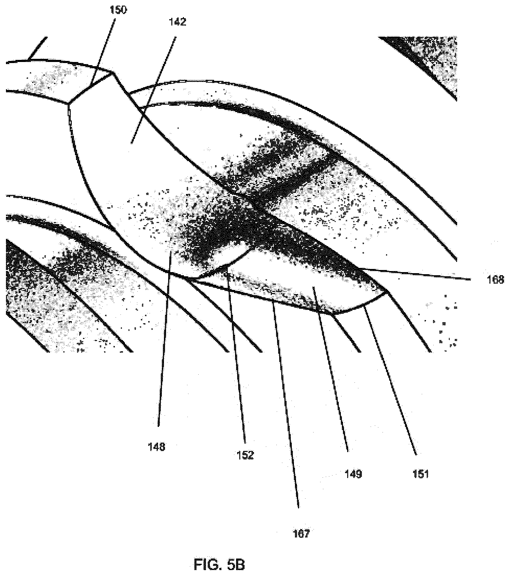

A further third aspect of the invention relates to the inflection point position of the thread (27), which may alternatively be in the midline (18) of the implant, or within 10%, 20% or 30% of distance of the implant midline, subject to the condition that the length ratio of the taper portion of the thread (12) with the length of the implant(14) ranges from 1:3 to 2:3, preferably 1:2. A further fifth aspect of the present invention relates to the geometry of the curved surface cavity, alternatively referred to as a self-cutting cavity, which can be seen in detail in Figures 4, 5A and 5B. The cavity may have two curved faces of different geometries, which intersect at the deepest point of the curve and define a cutting edge and an opposing edge at the ends of the cavity. The described cavities are configured to allow the selective removal of bone (for example, very dense or hard bone) during installation procedure. For example, the cavities can be used to cut bone (including dense or hard bone) by applying a counter-torque force to the bone. This counter-torque force is defined by the rotation of the implant in the direction opposite to the direction of implant installation. A dentist or surgeon may rotate the implant in the opposite direction of installation so that one or more cavities cut the bone at a partial installation area (e.g., when hard or dense bone tissue is found at that point) so as to allow continuation of the installation.

Still according to the additional fifth aspect of the invention, each cavity may be composed of a semi-spherical portion associated with a semi-cylindrical portion. In Figure 4, cutting cavities (40, 141, 142, 143, 144, 145 and 146) are spaced apart on one or more threads (23) of the implant over a plurality of turns. For example, cavity (141) is formed in turn (122), while cavity (142) is formed in turn (117), both cavities (141, 142) not necessarily being aligned or overlapping, but they may possibly overlap from 5% to 50% of its length in adjacent turns (117, 122). For example, if the cavity is 10mm wide (147), and it does not overlap an adjacent cavity by more than 10% of its width, then at most 1mm of the 10mm will overlap.

Still referring to Figure 4, the shown cavity (142) has a semi-spherical face (148) and a semi-cylindrical face (149). The cavity (142) defines a cutting edge (150) where the semi-spherical face (148) meets the outer surface of the turn (117). The cutting edge (150) is positioned on the thread so as to contact biological material (e.g., bone and blood vessels in the bone) prior to other portions of the cavity. The cutting edge (150) is configured to cut the biological material when a counter-torque is applied to the implant. The cavity (142) also defines an opposing end (151), opposing the cutting edge (150), where the semi-cylindrical face (149) encounters the outer surface of the turn (117). The semi-spherical face (148) encounters the semi-cylindrical face (149) within the cavity at a point of intersection (152), which may be the midpoint of the width of the cavity. Figure 4 further shows that the center line (153) of one or more curved cavities may be bent at an angle of inclination (154) relative to the longitudinal axis of the implant (11). The said inclination angle (154) may be between: 65° and 135°; 65° and 115°; 90° and 135°; 90° and 115°; 100° and 125°; or 100° and 115°.

While still discussing the fifth additional aspect of the invention, referring now to Figure 5A, the cavity (145) is provided with a semi-spherical face (155) defining a cutting edge (156) and a semi-cylindrical face defining an opposing end (158), while the opposing cavity(146) is also provided with a semi-spherical face (159) defining a cutting edge (160) and a semi-cylindrical face (161) defining an opposing end (162). To facilitate cutting during counter-torque, adjustment and/or removal, the semi-spherical face of the cavity may have a portion of the normal vectors of its surface (164) pointing with a deflection angle in the direction opposite the direction of implant installation (163). As shown in the cavity (145), the semi-spherical face (155) has a portion of normal vectors (164) (e.g., between 5% and 50% of normal vectors), pointing with a deviation angle (e.g., between 1° and 15°) in the direction opposite the direction of implant installation (163). The cutting edge (156) may cut biological material in a direction opposite to the installation direction (163) due to the concentration of normal vectors (164) on the close semi-spherical face (155) and on the cutting edge (156). As shown in the cutting cavity (146), the semi-cylindrical face (161) may be substantially in the form of a straight line parallel to the tangential line of the outer face of the thread, where the tangent line encounters the cutting edge (160). The semi-cylindrical face (161) can be perpendicular to the point where the cutting edge (160) encounters the outer face of the thread in the central axis (166).

Figure 5B shows the cutting cavity (142) in more detail. The semi-cylindrical face (149) of the cavity (142) may be configured in such a way that the half-cylinder that characterizes the face is disposed along the length of the cavity, in such a way that the apical end (167) and the cervical 10 end (168) of the cavity (142) are straight in the semi-cylindrical face (149). The semi-cylindrical face (149) may curve inwardly from the apical end (167) and form the cervical end (168) forming a portion of the semi-cylindrical surface. On the semi-spherical face (148), the apical (167) and cervical (168) ends are curved forming part of the semi-spherical surface, both alternatively, being able to curve inwardly to form part of the semi-spherical surface.

A method for inserting implants may include positioning an apical end of the implant at a desired location of the bone (e.g., in a prepared bore in the mandibular bone, where a prosthesis will be placed to replace one tooth or more teeth). The implant may have at least one thread extending around the implant core in a plurality of turns. At least one thread may be provided with a plurality of curved cavities, each one defining a cutting edge where a partially semi-spherical curved portion of the cavity encounters the outer surface of at least one thread. The method may further include rotating the implant (e.g. clockwise) so that at least one thread cuts the bone with which it is in contact to extend the opening in the bone as the implant is screwed into the bone. At least one thread may have a self-cutting configuration (e.g. at least where the thread(s) begin, at or adjacent to the apical end of the implant) to compress the bone as the implant is installed.

During the installation, the method may include applying a counter-torque by rotating the implant in the opposite direction (e.g., counterclockwise) to cut the bone with at least one cutting edge. Such counter-torque rotation may be especially advantageous to remove dense/hard bone tissue found during installation. For example, the dentist or surgeon can apply the counter-torque to cut and remove hard/dense bone material in a partial position of the installation before reaching the desired full depth of installation in the bone because, for example, the implant has been hampered during installation. After rotation of the counter-torque, the method may include rotating the implant in the installation direction (e.g., clockwise) to complete the installation. The method may further include repeating the counter-torque rotation one or more additional times during installation at the same depth or at different depths of the first counter-torque rotation. After installation, a prosthesis (e.g., crown, abutment, or bridge) may be attached to the implant directly or by means of an intermediate member such as an abutment.

One method may include positioning an apical end of the implant into a desired location of the bone (e.g., in a prepared bore in the mandibular bone, where a prosthesis will be placed to replace one or more teeth). The implant may have at least one thread extending around the implant core in a plurality of turns. At least one thread may have an external thread diameter configured to define a cylindrical portion and a tapered portion formed closer to the apical end than the cylindrical portion along the length of the implant. The method may further include rotating the implant in such a way that the tapered portion of at least one thread increases an opening diameter in the bone as the tapered portion penetrates the bone until the tapered portion is fully screwed in the bone. The method may further comprise continuing to rotate the implant so that the cylindrical portion of at least one thread enters the bone without increasing the opening diameter of the bore. The outer diameter of the cylindrical portion is equal to the maximum outer diameter of the tapered portion. Additionally, the cylindrical portion may be formed along at least 25% of the thread engagement.

## Claims

1. An implant with one prosthetic interface (28, 29, 30, 31) in its cervical region (2), one core (22) and at least one thread (23) extending from the cervical region to an opposing apical region (3), the external diameter (24) of the core (22) decreasing in the apical direction (19) and the external diameter (25) of the thread being constant in a first cylindrical portion (13); wherein that the outer diameter (25) of the thread is decreasing in a second tapered portion (12), also in the apical direction (19), where the decreasing rate (10) of the external diameter of the thread (23) in its tapered portion (12) is greater than the decreasing rate (9) of the diameter of the core (24); the greater height (104, 204) of the thread (23) occurs at the point of transition between the cylindrical portion (13) and the tapered portion (12) of the thread; and the width of the thread (4, 5, 6, 7) is greater in the threads (4, 7) near the cervical (1002) and apical (1003) ends, and smaller in the threads (5, 6) close to the point of transition (27) between the cylindrical portion (13) and the tapered portion (12) of the thread (23), and wherein the thread (23) includes semi-spherical cavities with cutting edges (40, 141, 142, 143, 144, 145, 146) spaced along its entire length.

2. Implant according to claim 1; **characterized in that** the implant (1, 1', 1", 1"', 1"") has two opposing threads (34, 35).

3. Implant according to any one of claims 1 to 2, **characterized in that** the apical end (1003) is shaped essentially rounded.

4. Implant according to any of the claims 1 to 3, **characterized in that** the apical end (1003) extends in the apical direction (19) between 0.1 and 0.7 mm ahead of the start of the threads (23), preferably between 0.25 and 0.5 mm.

5. Implant according to any one of claims 1 to 4, **characterized in that** at the upper end (20) of the cervical region (2), one or more concave rings are arranged (33).

6. Implant according to any of the claims 1 to 5, **characterized in that** the upper end (20) of the cervical region (2) is frustotapered in shape (8).

7. Implant according to any one of claims 1 to 6, **characterized in that** the prosthetic interface (28, 29) includes a morse cone type coupling (15).

8. Implant according to any of the claims 1 to 7, **characterized in that** the prosthetic interface includes an anti-rotational coupling in hexagon shape (30, 32).

9. Implant according to any of the claims 1 to 6, **characterized in that** the prosthetic interface is a single body type (31).

10. Implant according to any one of the claims 1 to 9, **characterized in that** each cutting edge of the semispherical face (148, 155, 159), is configured to cut biological material when a counter-torque is applied to the Implant.

11. Implant according to claim 10, **characterized in that** part of the normal vectors (164) of the surface of the semispherical surface (155) points, with an offset angle, in the direction opposite to the implant installation direction (163).

12. Implant according to any of the claims 1 to 11, **characterized in that** each cutting edge of the semi-spherical surface (40, 141, 142, 143, 144, 145, 146) further comprises a semi-cylindrical face (149, 157, 161), which defines an opposing end (151, 158, 162).

13. Implant according to claim 12, **characterized in that** the semi-cylindrical surface (161) is perpendicular to the point where the cutting edge (160) encounters the outer face of the thread in the central axis (166).

## Patentansprüche

1. Implantat mit einer prothetischen Schnittstelle (28, 29, 30, 31) in seinem zervikalen Bereich (2), einem Kern (22) und mindestens einem Gewinde (23), das sich vom zervikalen Bereich zu einem gegenüberliegenden apikalen Bereich (3) erstreckt, wobei der Außendurchmesser (24) des Kerns (22) in der apikalen Richtung (19) abnimmt und wobei der Außendurchmesser (25) des Gewindes in einem ersten zylindrischen Abschnitt (13) gleichbleibend ist; wobei der Außendurchmesser (25) des Gewindes in einem zweiten verjüngten Abschnitt (12) abnimmt, auch in der apikalen Richtung (19), wo die Abnahmerate (10) des Außendurchmessers des Gewindes (23) in ihrem verjüngten Abschnitt (12) größer als die Abnahmerate (9) des Durchmessers des Kerns (24) ist; die größere Höhe (104, 204) des Gewindes (23) am Übergangspunkt zwischen dem zylindrischen Abschnitt (13) und dem verjüngten Abschnitt (12) des Gewindes auftritt; und die Breite des Gewindes (4, 5, 6, 7) in den Gewinden (4, 7) nahe den zervikalen (1002) und apikalen (1003) Enden größer ist, und kleiner in den Gewinden (5, 6) dicht beim Übergangspunkt (27) zwischen dem zylindrischen Abschnitt (13) und dem verjüngten Abschnitt (12) des Gewindes (23), und wobei das Gewinde (23) halbkugelförmige Hohlräume mit Schneidkanten (40, 141, 142, 143, 144, 145, 146) einschließt, die entlang seiner gesamten Länge beabstandet sind.

2. Implantat nach Anspruch 1; **dadurch gekennzeichnet, dass** das Implantat (1, 1', 1", 1"', 1"") zwei gegenüberliegende Gewinde (34, 35) aufweist.

3. Implantat nach einem der Ansprüche 1 bis 2, **dadurch gekennzeichnet, dass** das apikale Ende (1003) im Wesentlichen gerundet geformt ist.

4. Implantat nach einem der Ansprüche 1 bis 3, **dadurch gekennzeichnet, dass** sich das apikale Ende (1003) in der apikalen Richtung (19) zwischen 0,1 und 0,7 mm vor dem Beginn der Gewinde (23) erstreckt, bevorzugt zwischen 0,25 und 0,5 mm.

5. Implantat nach einem der Ansprüche 1 bis 4, **dadurch gekennzeichnet, dass** am oberen Ende (20) des zervikalen Bereichs (2) eine oder mehrere konkave Ringe angeordnet sind (33).

6. Implantat nach einem der Ansprüche 1 bis 5, **dadurch gekennzeichnet, dass** das obere Ende (20) des zervikalen Bereichs (2) eine kegelstumpfförmige Form besitzt (8).

7. Implantat nach einem der Ansprüche 1 bis 6, **dadurch gekennzeichnet, dass** die prothetische Schnittstelle (28, 29) ein Verbindungsstück vom Morsekonustyp (15) einschließt.

8. Implantat nach einem der Ansprüche 1 bis 7, **dadurch gekennzeichnet, dass** die prothetische Schnittstelle ein Drehverhinderungs-Verbindungsstück in Sechskantform (30, 32) einschließt.

9. Implantat nach einem der Ansprüche 1 bis 6, **dadurch gekennzeichnet, dass** die prothetische Schnittstelle ein Einzelkörper-Typ (31) ist.

10. Implantat nach einem der Ansprüche 1 bis 9, **dadurch gekennzeichnet, dass** jede Schneidkante der halbkugelförmigen Fläche (148, 155, 159) konfiguriert ist, um biologisches Material zu schneiden, wenn ein Gegendrehmoment auf das Implantat ausgeübt wird.

11. Implantat nach Anspruch 10, **dadurch gekennzeichnet, dass** ein Teil der normalen Vektoren (164) der Oberfläche der halbkugelförmigen Oberfläche (155) mit einem Abweichwinkel in die Richtung zeigt, die der Implantat-Installationsrichtung (163) entgegengesetzt ist.

12. Implantat nach einem der Ansprüche 1 bis 11, **dadurch gekennzeichnet, dass** jede Schneidkante der halbkugelförmigen Oberfläche (40, 141, 142, 143, 144, 145, 146) weiter eine halbzylindrische Fläche (149, 157, 161) umfasst, die ein gegenüberliegendes Ende (151, 158, 162) definiert.

13. Implantat nach Anspruch 12, **dadurch gekennzeichnet, dass** die halbzylindrische Oberfläche (161) senkrecht zum Punkt ist, wo die Schneidkante (160) auf die Außenfläche des Gewindes in der Mittelachse (166) trifft.

## Revendications

1. Implant doté d'une interface prothétique (28, 29, 30, 31) dans sa région cervicale (2), d'une partie centrale (22) et d'au moins un filetage (23) s'étendant entre la région cervicale et une région apicale opposée (3), le diamètre externe (24) de la partie centrale (22) diminuant dans la direction apicale (19) et le diamètre externe (25) du filetage étant constant dans une première partie cylindrique (13) ; dans lequel le diamètre externe (25) du filetage diminue dans une seconde partie conique (12), également dans la direction apicale (19), dans lequel le taux de diminution (10) du diamètre externe du filetage (23) dans sa partie conique (12) est supérieur au taux de diminution (9) du diamètre de la partie centrale (24) ; la hauteur maximale (104, 204) du filetage (23) se situe au niveau du point de transition entre la partie cylindrique (13) et la partie conique (12) du filetage ; et la largeur du filetage (4, 5, 6, 7) est plus grande dans les filetages (4, 7) proches des extrémités cervicale (1002) et apicale (1003), et plus petite dans les filetages (5, 6) proches du point de transition (27) entre la partie cylindrique (13) et la partie conique (12) du filetage (23), et dans lequel le filetage (23) comprend des cavités semi-sphériques dotées de bords de coupe (40, 141, 142, 143, 144, 145, 146) espacés le long de la totalité de sa longueur.

2. Implant selon la revendication 1, **caractérisé en ce que** l'implant (1, 1', 1", 1"', 1"") a deux filetages opposés (34, 35).

3. Implant selon l'une quelconque des revendications 1 à 2, **caractérisé en ce que** l'extrémité apicale (1003) a une forme essentiellement arrondie.

4. Implant selon l'une quelconque des revendications 1 à 3, **caractérisé en ce que** l'extrémité apicale (1003) s'étend dans la direction apicale (19) entre 0,1 et 0,7 mm devant le début des filetages (23), de préférence entre 0,25 et 0,5 mm.

5. Implant selon l'une quelconque des revendications 1 à 4, **caractérisé en ce qu'**au niveau de l'extrémité supérieure (20) de la région cervicale (2), un ou plusieurs anneaux concaves sont agencés (33).

6. Implant selon l'une quelconque des revendications 1 à 5, **caractérisé en ce que** l'extrémité supérieure (20) de la région cervicale (2) a une forme tronconique (8).

7. Implant selon l'une quelconque des revendications 1 à 6, **caractérisé en ce que** l'interface prothétique (28, 29) comprend un couplage de type cône morse (15).

8. Implant selon l'une quelconque des revendications 1 à 7, **caractérisé en ce que** l'interface prothétique comprend un couplage anti-rotation en forme d'hexagone (30, 32).

9. Implant selon l'une quelconque des revendications 1 à 6, **caractérisé en ce que** l'interface prothétique est de type corps unique (31).

10. Implant selon l'une quelconque des revendications 1 à 9, **caractérisé en ce que** chaque bord de coupe de la face semi-sphérique (148, 155, 159) est configuré pour couper un matériau biologique lorsqu'un contre-couple appliqué à l'implant.

11. Implant selon la revendication 10, **caractérisé en ce qu'**une partie des vecteurs normaux (164) de la surface de la surface semi-sphérique (155) pointe, avec un angle de décalage, dans la direction opposée à la direction de pose d'implant (163).

12. Implant selon l'une quelconque des revendications 1 à 11, **caractérisé en ce que** chaque bord de coupe de la surface semi-sphérique (40, 141, 142, 143, 144, 145, 146) comprend en outre une face semi-cylindrique (149, 157, 161), qui définit une extrémité opposée (151, 158, 162).

13. Implant selon la revendication 12, **caractérisé en ce que** la surface semi-cylindrique (161) est perpendiculaire au point où le bord de coupe (160) rencontre la face externe du filetage dans l'axe central (166).
